**Europäisches Patentamt**

**European Patent Office**

**Office européen des brevets**

(19)

(11) Veröffentlichungsnummer : **0 106 908 B1**

(12) **EUROPÄISCHE PATENTSCHRIFT**

(45) Veröffentlichungstag der Patentschrift :
28.05.86

(21) Anmeldenummer : 82109784.7

(22) Anmeldetag : 22.10.82

(51) Int. Cl.⁴ : **B 01 D 39/14**, D 21 F 11/14, F 02 M 35/024

(54) Mehrschichtiges Filtermaterial, Verfahren zu dessen Herstellung und Verwendung desselben.

(43) Veröffentlichungstag der Anmeldung :
02.05.84 Patentblatt 84/18

(45) Bekanntmachung des Hinweises auf die Patenterteilung : 28.05.86 Patentblatt 86/22

(84) Benannte Vertragsstaaten :
AT BE CH DE FR GB IT LI LU NL SE

(56) Entgegenhaltungen :
EP-A- 0 053 879
DE-A- 2 813 356
FR-A- 2 296 451
GB-A-  818 513
US-A- 2 928 765
US-A- 3 353 682
US-A- 4 012 281
US-A- 4 032 457
ZEMENT - KALK - GIPS, Jahrgang 31, Nr. 7, Juli 1978, Seiten 349-354, Wiesbaden, DE. H. DIETRICH: "Eigenschaften und Eignung von Faserstoffen für Filter"

(73) Patentinhaber : **Gessner & Co. GmbH**
**Postfach 1140**
**D-8206 Bruckmühl/Mangfall 1 (DE)**

(72) Erfinder : **Aumann, Günther, Dipl.-Ing.**

**D-8206 Bruckmühl (DE)**
Erfinder : **Aigner, Helmar**

**D-8201 Kolbermoor (DE)**
Erfinder : **Schuster, Hans-Karl, Dipl.-Ing.**

**D-8206 Bruckmühl (DE)**

(74) Vertreter : **Hansen, Bernd, Dr.rer.nat. et al**
**Hoffmann, Eitle & Partner Patentanwälte Arabellastrasse 4**
**D-8000 München 81 (DE)**

EP 0 106 908 B1

**0 106 908**

## Beschreibung

Die Erfindung betrifft ein mehrschichtiges Filtermaterial aus einer Grob- und Feinfilterschicht, wobei die Filterschichten einen Anteil natürlicher Fasern enthalten, und die einzelnen Schichten aus Faserstoffsuspensionen verschiedener Zusammensetzung ohne Verwendung eines Bindemittels auf der Papiermaschine miteinander verbunden sind. Im weiteren betrifft die Erfindung ein Verfahren zur Herstellung eines mehrschichtigen Filtermaterials sowie die Verwendung desselben.

Es ist bekannt, zur Filtration von Verunreinigungen aus der Luft, Dämpfen und Flüssigkeiten Filtermaterialien einzusetzen, die aus mehreren Schichten unterschiedlicher Porosität aufgebaut sind. Dabei nimmt die Porosität in Durchflußrichtung ab, d. h. die einzelnen Schichten weisen zunehmend feinere bzw. engere Poren auf. Ein mehrschichtiger Filteraufbau ist vorteilhaft, indem gröbere Partikel bereits in oder auf der oberen grobporigen Schicht zurückgehalten werden, ohne dabei die feinen Poren zu verstopfen. Auf diese Weise wird eine längere Standzeit des Filters gewährleistet.

Es sind Verfahren und Vorrichtungen zur Herstellung von mehrschichtigen Filterpapieren auf der Papiermaschine bekannt. Danach werden die einzelnen Filterlagen ohne Verwendung eines Bindemittels miteinander verbunden. DE-B-12 20 716 beschreibt eine Vorrichtung zur Herstellung mehrschichtiger Faserstoffbahnen, wobei die Stoffzuführung in horizontal angeordneten Einzelkanälen auf ein als Steilsieb ausgebildetes endloses Entwässerungssieb erfolgt. Um eine Wirbelbildung in der Bahnbildungszone zu vermeiden, ist gemäß der vorstehenden Druckschrift vorgesehen, die Entwässerung mit Hilfe horizontal angeordneter Saugkästen vorzunehmen.

US-A-2 928 765 beschreibt ein Verfahren zur Herstellung eines zweilagigen Luftfilters auf der Papiermaschine unter Verwendung eines Steilsiebes. Dabei wird zunächst über einen Kanal das Material für die grobporige Schicht auf das Entwässerungssieb aufgegeben, worauf im nächsten Schritt der Stoffauflauf für die feinporige Schicht erfolgt, welche dann auf dem sich bildenden Papierblatt oben zu liegen kommt.

Bei den bekannten mehrschichtigen Filtermaterialien werden die Porositätsgrade der einzelnen Lagen so gewählt, daß hinsichtlich des erzielten Abscheidungsgrades und der Standzeit möglichst optimale Werte erhalten werden. Dabei ist zu berücksichtigen, daß hoher Abscheidungsgrad und lange Standzeit Parameter darstellen, deren Optimierung einander konträr läuft. Will man nämlich eine möglichst lange Standzeit erzielen, so setzt man möglichst grobporiges Papier ein, wodurch sich aber der Abscheidungsgrad verschlechtert. Soll andererseits ein möglichst hoher Abscheidungsgrad erzielt werden, so ist es erforderlich, möglichst feinporige Filterpapiere zu verwenden, welche durch die abgeschiedenen Partikel verhältnismäßig schnell verstopft werden. Dadurch erhöht sich der Durchflußwiderstand am Filter und die Standzeit desselben wird verkürzt.

Aus der DE-B-22 32 178 ist ein zweilagiges Filter bekannt, bei dem eine Plüschfaserschicht mit Hilfe eines Klebstoffes auf eine feinporige Unterlage aufgeklebt ist. Durch das Aufkleben der Fasern werden die feinen Poren des Grundblattes mit Klebstoffpartikeln verstopft, wodurch sich die Standzeit des Filters verringert.

Aufgabe der vorliegenden Erfindung ist es, ein mehrschichtiges Filtermaterial zur Verfügung zu stellen, dessen Schichten ohne Verwendung von Bindemittel miteinander fest verbunden sind, wobei mindestens eine Lage, die einen hohen Abscheidungsgrad des Filtermaterials gewährleistet, und mindestens eine andere Lage vorgesehen ist, die eine lange Standzeit des Filters sicherstellt. Im weiteren soll ein Verfahren zur Herstellung eines mehrschichtigen Filtermaterials geschaffen und dessen spezielle Verwendung beschrieben werden.

Die vorstehende Aufgabe wird gemäß der Erfindung durch das eingangs beschriebene Filtermaterial gelöst, welches dadurch gekennzeichnet ist, daß

a) die Grobfilterschicht aus einem Gemisch natürlicher und synthetischer Fasern besteht, wobei

b) mindestens ein Teil der synthetischen Fasern strukturiert ist, und

c) an der Oberfläche der Grobfilterschicht liegende synthetische Fasern von der Ebene des Filtermaterials abstehen.

Gemäß der Erfindung werden die einander konträren Funktionen « hoher Abscheidungsgrad » und « lange Standzeit » durch die in ihrem Aufbau unterschiedlichen Filterschichten jeweils für sich in optimaler Weise erfüllt. Neben einer feinen Filterschicht, die so ausgewählt wird, daß sie den gewünschten Abscheidungsgrad des Filters gewährleistet, wird eine Grobfilterschicht eingesetzt, die aufgrund ihrer rauhen Oberfläche die Bildung eines lockeren Filterkuchens begünstigt, wodurch vermieden wird, daß der Durchflußwiderstand am Filter zu schnell ansteigt und dadurch die Standzeit des Filters verringert wird.

Die rauhe Oberfläche der Oberseite der Grobfilterschicht besteht aus einem Gemisch natürlicher und synthetischer Fasern, wobei die synthetischen Fasern vorwiegend eine Strukturierung aufweisen. Strukturierung bedeutet in diesem Zusammenhang, daß die Fasern einen Querschnitt aufweisen, der vom runden Querschnitt abweicht, und bevorzugt eine X-, Y-, V-Form bzw. eine Hantelform besitzen. Aufgrund dieser Strukturierung besitzen die Fasern eine erhöhte Oberfläche. Die synthetischen Fasern, die eine Länge bis zu 40 mm aufweisen können, sind in den natürlichen Fasern der Grobfilterschicht eingebettet und werden von diesen gehalten.

2

Die an der Oberfläche der Grobfilterschicht zu liegen kommenden Fasern sind so angeordnet, daß sie von der Ebene des Filtermaterials abstehen. Das Aufrichten der synthetischen Fasern und deren Abstehen aus der Ebene des Filtermaterials wird durch das nachfolgend beschriebene erfindungsgemäße Herstellungsverfahren in Kombination mit den verwendeten synthetischen strukturierten Fasern bewirkt. Dabei ist gemäß der Erfindung nicht ausgeschlossen, daß auch ein Teil der sich an der Oberfläche der Grobfilterschicht befindlichen natürlichen oder synthetischen, nichtstrukturierten Fasern aus der Ebene des Filtermaterials abstehen kann.

Je nach der Verfahrensführung, insbesondere der Entwässerungsgeschwindigkeit auf dem Steilsieb und der Richtung des Wasserabzuges, sowie in Abhängigkeit der verwendeten synthetischen Fasern, insbesondere deren Strukturierung, Durchmesser und Faserlänge, wird ein mehr oder weniger starkes Aufstellen der synthetischen Fasern an der Oberfläche der Grobfilterschicht erreicht.

Durch die aus der Ebene des Filtermaterials herausstehenden strukturierten synthetischen Fasern wird die gewünschte Rauhigkeit der Oberfläche des Filtermaterials erzielt, welche den Aufbau des geschlossenen Filterkuchens — zumindest über einen verlängerten Zeitraum hin — vermeidet.

Das mehrschichtige Filtermaterial gemäß der Erfindung weist zwischen der Grobfilterschicht und der Feinfilterschicht eine Mischzone auf, welche ein Gemisch der Faseranteile von Grob- und Feinfilterschicht umfaßt. Die Ausbildung der Mischzone ergibt sich durch das erfindungsgemäße Herstellungsverfahren des Filterpapiers in einem Arbeitsgang auf der Papiermaschine, wobei die Faserstoffsuspensionen für die Fein- und Grobfilterschicht unmittelbar hintereinander auf ein als Steilsieb ausgebildetes Entwässerungssieb aufgebracht werden. In Abhängigkeit der Verfahrensführung, insbesondere der Entwässerungsgeschwindigkeit auf dem Steilsieb, erfolgt eine mehr oder weniger starke Vermischung der Suspensionen in der Grenzphase, wodurch sich eine Mischzone unterschiedlicher Dicke ergibt. Durch das Vorliegen einer Mischzone wird das Filtrierergebnis des erfindungsgemäßen Filtermaterials im weiteren positiv beeinflußt.

Im übrigen kann das mehrschichtige Filtermaterial gemäß der Erfindung aus einer oder mehreren Grobfilterschichten sowie aus einer oder mehreren Feinfilterschichten, die eine unterschiedliche Porosität aufweisen, wobei diese in Durchflußrichtung abnimmt, enthalten.

Der Anteil der Grobfilterschicht zur Feinfilterschicht kann je nach dem Verwendungszweck des Filtermaterials variieren und liegt bevorzugt im Bereich 1 : 4 bis 4 : 1, bezogen auf das Gewichtsverhältnis von Grobfilterschicht zu Feinfilterschicht.

Die Grobfilterschicht des mehrlagigen Filtermaterials gemäß der Erfindung enthält strukturierte synthetische Fasern mit einem Titer von 1,2 bis 15 dtex, bevorzugt von 2,5 bis 6 dtex, und einer Länge von 0,4 bis 40 mm, bevorzugt von 2,0 bis 20 mm.

Der Anteil der strukturierten synthetischen Fasern in der Grobfilterschicht beträgt 20 bis 80 Gew.-%, bevorzugt ca. 40 Gew.-%, bezogen auf das Gewicht der Grobfilterschicht. Die in der Grobfilterschicht verwendeten strukturierten synthetischen Fasern weisen bevorzugt eine X-, Y- oder V-Form auf, oder sind nach einer besonders bevorzugten Ausführungsform in Hantelform ausgebildet. Durch die Profilstruktur der synthetischen Fasern besitzen diese insbesondere eine erhöhte Oberfläche.

Eine bevorzugte strukturierte synthetische Faser stellt die Polyacrylnitrilfaser dar, insbesondere eine hantelförmig strukturierte Polyacrylnitrilfaser. Die erfindungsgemäß verwendeten Polyacrylnitrifasern werden bevorzugt durch Trockenspinnen aus Acrylnitril-Polymerisaten hergestellt. Diese Polymerisate können aus Homopolymerisaten, Mischpolymerisaten oder Polymerisatmischungen mit wenigstens 80 Gew.-% polymerisiertem Acrylnitril bestehen. Ausserdem kann auch eine Polyacrylnitrilfaser mit 100 % Acrylnitril verwendet werden. Bevorzugt wird eine Polyacrylnitrilfaser verwendet, dei einen Titer von 1,2-15 dtex und eine Länge von 4 bis 8 mm aufweist.

Die strukturierten synthetischen Fasern der Grobfilterschicht können auch Mehrkomponentenfasern darstellen, insbesondere Kern-Mantel- und Bifilar-Fasern.

Neben den vorstehend genannten Materialien können die strukturierten synthetischen Fasern der Grobfilterschicht auch aus einem Polyamid einer Dicarbonsäure und Hexamethylendiamin, einer Polyamidfaser auf Caprolactambasis, einem Polyester, einer Cellulose-Regenerat-Faser oder aus Glasfasern bestehen.

Neben den strukturierten synthetischen Fasern kann die Grobfilterschicht auch einen Anteil von 10 bis 30 Gew.-%, bezogen auf das Gesamtgewicht der Grobfilterschicht, nicht strukturierter, synthetischer Fasern enthalten.

Nach einer bevorzugten Ausführungsform gemäß der Erfindung ist vorgesehen, daß die an der Oberfläche der Grobfilterschicht liegenden synthetischen Fasern in statistischer Verteilung von bzw. aus der Ebene des Filtermaterials abstehen, d. h. daß sie in unterschiedlicher Länge und unterschiedlichem Winkel von der Filterebene abstehen.

Nach einer weiteren Ausführungsform stehen die strukturierten synthetischen Fasern an der Oberfläche der Grobfilterschicht überwiegend in einem spitzen Winkel von der Ebene des Filtermaterials ab.

Besonders bevorzugt ist es, wenn die strukturierten synthetischen Fasern von der Ebene des Filtermaterials in einer unterschiedlichen Länge, insbesondere in einer Länge von 0,5 bis 20 mm, abstehen, so daß auf diese Weise eine möglichst unregelmäßige, d. h. rauhe Oberfläche des Filtermaterials gebildet wird. Von den Erfindern wurde festgestellt, daß eine derart rauhe Oberfläche der

3

Grobfilterschicht am besten dazu geeignet ist, den Aufbau eines möglichst lockeren Filterkuchens zu begünstigen. Dieser Effekt wird verstärkt, wenn die strukturierten Fasern, die in unterschiedlicher Länge und unterschiedlichem Winkel aus der Ebene des Filtermaterials abstehen, außerdem noch unterschiedliche Faserdurchmesser aufweisen.

Die in der Grobfilterschicht enthaltenen natürlichen Fasern weisen vorteilhafterweise einen Durchmesser von 20 bis 50 μm, besonders bevorzugt von 25 bis 40 μm, und eine Länge von 2,5 bis 6 mm auf.

Nach einer bevorzugten Ausführungsform gemäß der Erfindung stammen die in der Grobfilterschicht enthaltenen natürlichen Fasern von Nadelhölzern. Besonders bevorzugt ist es, wenn die natürlichen Fasern in der Grobfilterschicht einen hochporösen Kiefernzellstoff darstellen.

Im übrigen können die natürlichen Fasern in der Grobfilterschicht auch Linters der Baumwollpflanze mit einem Durchmesser von 20 bis 25 μm und einer Länge von 2 bis 6 mm enthalten.

Der Anteil der natürlichen Fasern in der Grobfilterschicht beträgt bevorzugt 20 bis 80 Gew.-%, bezogen auf das Gesamtgewicht der Grobfilterschicht.

Die Feinfilterschicht des erfindungsgemäßen Filtermaterials besteht bevorzugt aus natürlichen Fasern mit einem Durchmesser von 7 bis 20 μm, bevorzugt von 7 bis 12 μm, und einer Länge von 0,5 bis 3,5 mm. Nach einer besonderen Ausführungsform enthält die Feinfilterschicht Fasern aus Laubhölzern mit einem Durchmesser von 7 bis 12 μm und einer Länge von 0,5 bis 1,5 mm.

Man erzielt den kleineren Porendurchmesser der Feinfilterschicht durch den Anteil an Feinfasern, der von 15 bis 50 Gew.-% gehen kann.

Es ist bevorzugt, daß die Feinfilterschicht eine Eukalyptusfaser enthält.

Im weiteren kann die Feinfilterschicht auch einen Anteil von 5 bis 40 % synthetischer Fasern enthalten, bezogen auf das Gewicht der Feinfilterschicht.

Die Feinfilterschicht kann auch einen üblicherweise für Filtermaterialien verwendeten Füllstoff aufweisen, doch sollen insbesondere nur Füllstoffe faseriger Natur, d. h. Füllstoffe grosser Oberfläche, eingesetzt werden. Besonders geeignet ist Diatomeenerde.

Das Filtermaterial gemäß der Erfindung wird vorzugsweise mit einer Imprägnierung zur Erhöhung der mechanischen Festigkeit sowie der thermischen und chemischen Stabilität ausgestattet. Als Imprägniermittel eignen sich insbesondere Harze aus der Gruppe der Aminoplaste, Phenoplaste, Epoxiharze, Vinylharze und Urethane, wie auch Acrylatharze. Es ist bevorzugt, daß die Imprägnierung auf der Seite der Grobfilterschicht aufgebracht wird und diese durchdringt. Zum Imprägnieren verwendet man 5 bis 30 Gew.-% Harz, bezogen auf das Gesamtgewicht des Filtermaterials. Bei einer Nachbehandlung des Filtermaterials nach dem Imprägnieren muß vermieden werden, daß die Oberfläche der Grobfilterschicht ihre Rauhigkeit verliert. Es ist jedoch möglich, das Filtermaterial nach dem Imprägnierschritt zur Oberflächenvergrößerung zu rillieren.

Auberdem kann das Filtermaterial zur Erhöhung seiner Festigkeit und Steifigkeit zwischen der Grob- und Feinfilterschicht eine Stützschicht aufweisen. Diese Stützschicht kann aus einem synthetischen, halbsynthetischen oder metallischen Material bestehen und als Gewebe beliebiger Stützstruktur, Gewirke oder als Endlosfilamente, Zick-Zack-Streifen etc. vorliegen. Besonders bevorzugt ist es, wenn die Stützschicht eine Baumwollschicht darstellt.

Ein besonders bevorzugtes Filtermaterial gemäß der Erfindung besitzt die nachfolgenden Merkmale und setzt sich wie folgt zusammen aus :

a) einer Grobfilterschicht aus einem Gemisch strukturierter Polyacrylnitrilfasern mit einem Titer von 1,2 bis 15 dtex und einer Länge von 4 bis 8 mm, und einem hochporösen Kieferzellstoff mit einem Durchmesser von 20 bis 50 μm und einer Länge von 2,5 bis 6 mm, und

b) einer Feinfilterschicht aus vorwiegend natürlichen Fasern mit einer Dicke von 7 bis 12 μm und einer Länge von 0,5 bis 3,5 mm,

c) wobei an der Oberfläche der Grobfilterschicht liegende Acrylnitrilfasern von der Ebene des Filtermaterials in unterschiedlicher Länge und unterschiedlichem Winkel abstehen.

Bei dem vorstehenden bevorzugten Filtermaterial beträgt der Anteil der strukturierten synthetischen Fasern in der Grobfilterschicht 40 Gew.-%, der des hochporösen Kieferzellstoffes in derselben 60 Gew.-%, bezogen auf das Gesamtgewicht der Grobfilterschicht. Das Verhältnis Grobfilterschicht zu Feinfilterschicht ist 1 : 3. Die Dicke des Filtermaterials beträgt bevorzugt 0,6 bis 0,7 mm.

Das Filtermaterial gemäß der Erfindung wird nach einem speziellen Verfahren hergestellt, wobei die Zuführung des Stoffauflaufes verschiedener Faserstoffsuspensionen, welche die Schichten unterschiedlicher Porosität ergeben, in mindestens zwei unmittelbar übereinander angeordneten Einzelkanälen auf ein als Steilsieb ausgebildetes, endloses Entwässerungssieb erfolgt, und das Filtermaterial entwässert, imprägniert und getrocknet wird, wobei

a) zunächst über mindestens einen der im unteren Teil der Stoffzuführung angeordneten Einzelkanäle eine wässrige Faserstoffsuspension von vorwiegend natürlichen Fasern mit einem Durchmesser von 7 bis 20 μm und einer Länge von 0,5 bis 3,5 mm, und

b) dann über mindestens einen der im oberen Teil der Stoffzuführung angeordneten Einzelkanäle eine wässrige Faserstoffsuspension aus einem Gemisch strukturierter, synthetischer Fasern mit einem Titer von 1,2 bis 15 dtex und einer Länge von 0,5 bis 40 mm, und natürlichen Fasern, mit einem Durchmesser von 20 bis 50 μm und einer Länge von 2,5 bis 6 mm auf das Steilsieb aufgebracht werden.

Die Entwässerung der auf das Steilsieb aufgebrachten Faserstoffsuspensionen erfolgt bevorzugt

4

durch einen Wasserabzug, welcher zur Anströmrichtung der Faserstoffsuspensionen etwa einen rechten Winkel bildet. Dabei ergibt sich eine Umlenkung des Stoffwassers, wodurch in der Bahnbildungszone eine Wirbelbildung erzeugt wird.

Dabei liegt gemäß der Erfindung ein wesentliches Merkmal darin, daß auf das Steilsieb zuerst die Faserstoffsuspension aufgebracht wird, die zur Bildung der feinporigen Filterschicht führt, und die Faserstoffsuspension, welche die strukturierten synthetischen Fasern enthält, zuletzt aufgetragen wird. Auf diese Weise können sich die strukturierten synthetischen Fasern, begünstigt durch das vorstehend beschriebene Herstellungsverfahren, aufstellen und von der Ebene des Filterpapieres abstehen.

Die einzelnen Filterschichten verschiedener Zusammensetzung des nach dem erfindungsgemäßen Verfahren hergestellten Filtermaterials besitzen eine gute gegenseitige Verfilzung, da die einzelnen Schichten nicht streng voneinander getrennt, sondern über eine Mischzone miteinander verbunden sind. Ein Aufspalten der einzelnen Schichten kann daher bei Einwirkung von Wärme oder Feuchtigkeit nicht erfolgen.

Gemäß der Erfindung kann auch bei dem vorstehend beschriebenen Stoffauflauf auf der Papiermaschine eine Stützschicht aus einem synthetischen, halbsynthetischen oder metallischen Material in Form eines Gewebes oder als Endlosfilamente zwischen der Grobfilterschicht und der Feinfilterschicht in das Filtermaterial eingearbeitet werden.

Das Filtermaterial gemäß der Erfindung eignet sich insbesondere zur Filtration von Verunreinigungen aus der Luft, Gasen, Dämpfen und Flüssigkeiten. Es findet insbesondere Verwendung als Luftfilter, Filter für Gasturbinen sowie als Staubfilter von Industriestäuben, in Dunstabzugshauben, als Filter für Klimaanlagen, als Ölfilter, Treibstofffilter und Hydraulik-Öl-Filter. Insbesondere ist das Filtermaterial gemäß der Erfindung geeignet zur Verwendung als Luftfilter in Kraftfahrzeugen.

Bei Verwendung als Kfz-Luftfilter besitzt das Filtermaterial bevorzugt eine Dicke von 0,5 bis 0,8 mm, besonders bevorzugt von 0,6 bis 0,7 mm. Zur Optimierung ist hier sowohl die Staubaufnahme als auch die Rauminanspruchnahme zu berücksichtigen.

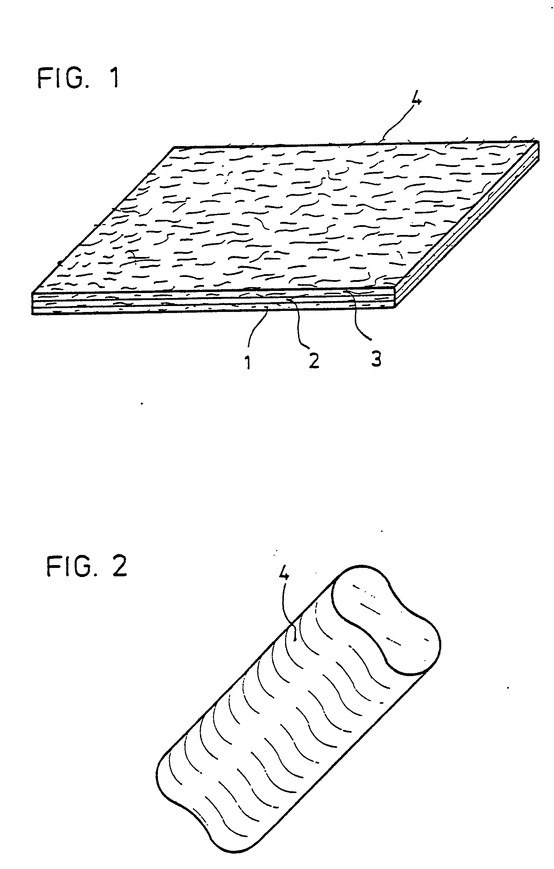

Figur 1 stellt eine schematische Abbildung des Filters gemäß der Erfindung dar, wobei dei Bezugszeichen die folgenden Bedeutungen haben : 1 = Feinfilterschicht, 2 = Mischzone, 3 = Grobfilterschicht, 4 = aus der Ebene des Filtermaterials abstehende strukturierte synthetische Fasern.

Figur 2 gibt einen Ausschnitt aus Fig. 1 wieder und stellt eine aus der Ebene des Filtermateriales herausstehende hantelförmig strukturierte, synthetische Faser dar.

Ausführungsbeispiel

Auf einer mit einem Steilsieb und zwei übereinander angeordneten Einzelkanälen für die Zuführung des Stoffauflaufes ausgestatteten Papiermaschine wurde im unteren Einzelkanal zunächst eine wässrige Faserstoffsuspension aus natürlichen Fasern mit einem Durchmesser von 7 bis 12 μm und einer Länge von 0,5 bis 3,5 mm (Feststoffanteil der Suspension ; 0,08 Gew.-%) auf das Steilsieb zur Bildung einer Feinfilterschicht aufgetragen und entwässert.

Daraufhin wurde über den oberen Einzelkanal auf die sich bereits bildende Feinfilterschicht eine wäßrige Faserstoffsuspension aus einem Gemisch von 40 Gew.-% hantelförmig strukturierten Polyacrylnitrilfasern mit einem Titer von 3 bis 5 dtex und einer Länge von 4 bis 8 mm und 60 Gew.-% eines hochporösen Kiefernzellstoffes mit einem Durchmesser von 20 bis 50 μm und einer Länge von 2,5 bis 6 mm (Feststoffanteil der Suspension : 0,08 Gew.-%) zur Bildung der Grobfilterschicht aufgebracht und entwässert.

Der Anteil von Grobfilterschicht zu Feinfilterschicht betrug in dem gebideten Filtermaterial 2 : 1. Zur Entwässerung erfolgte der Wasserabzug im rechten Winkel zur Anströmrichtung der Faserstoffsuspension.

Die Trocknung des Filtermaterials wurde auf der Papiermaschine bei 136 °C durchgeführt.

Nach diesem Verfahren wurden gemäß der Erfindung Filtermaterialien unterschiedlichen Flächengewichtes (z. B. LX1.1 und LX 1) hergestellt, die wie nachfolgend beschrieben, getestet wurden.

Anhand der folgenden Beispiele und Vergleichsbeispiele werden die verbesserten Eigenschaften des erfindungsgemäßen Filtermaterials in bezug auf Standzeit und Abscheidungsgrad aufgezeigt.

Die Leistung des Filters wird definiert durch die Staubaufnahme bis zur Erreichung eines bestimmten Durchflußwiderstandes sowie durch die Staubdurchlässigkeit des Filters, aus welcher der Abscheidungsgrad in Prozent ermittelt wird.

Die Bestimmung der Staubaufnahme, die ein Mass für die Standzeit des Filtermaterials ist, sowie der Staubdurchlässigkeit, aus welcher sich der Abscheidungsgrad errechnen läßt, wurde nach einem von der Anmelderin entwickelten gravimetrischen Verfahren bestimmt.

Hierzu wurde das zu untersuchende Filtermaterial in einer Apparatur so eingespannt, daß ein mit Staub beladener Luftstrom das Filterpapier passieren mußte. Für die Versuche wurde ein standardisierter Staub verwendet, welcher unter der Bezeichnung AC-GM-AIRCLEANER von GMC-FLINT/Mich., USA erhältlich ist. Das Einblasen von Luft in die Apparatur erfolgte bei einem Luftdurchsatz von 1,3 l/s. Die freie Filterfläche betrug 78,5 cm². Der Versuch wurde jeweils bis zu einer Zunahme des Druckes über dem Filtermaterial auf 200 mm Wassersäule durchgeführt und dann abgebrochen. Der auf dem Filtermaterial abgeschiedene Staub sowie die Staubmenge, die das Filtermaterial passieren konnte und auf einem zweiten, sehr feinporigen Filter gesammelt wurden, wurden gravimetrisch bestimmt.

Versuch 1

Bei diesem Versuch wurde ein erfindungsgemäßes Filtermaterial (LX1.1) mit einem Flächengewicht von 119 g/m² und einer Dicke von 0,78 mm verwendet.

Die Versuchsdurchführung erfolgte wie vorstehend beschrieben, wobei eine Staubaufnahme von 390 bis 400 g/m² und ein Abscheidungsgrad von 99,7 % ermittelt wurde.

Versuch 2

Unter Verwendung des erfindungsgemäßen Filtermaterials (LX 1) mit einem Flächengewicht von 105 g/m² und einer Dicke von 0,65 mm wurde nach den vorstehend beschriebenen Versuchsbedingungen eine Staubaufnahme von 300 g/m² erzielt und der Abscheidungsgrad zu 99,6 % ermittelt.

Vergleichsversuch

Vergleichsweise wurde ein einschichtiges, herkömmliches Filtermaterial (L1) mit einem Flächengewicht von 105 g/m² und einer Dicke von 0,65 mm eingesetzt. Das Vergleichsfiltermaterial enthielt 100 Gew.-% natürliche Fasern mit einem Durchmesser von 7 bis 50 µm und einer Länge von 0,5 bis 6,0 mm.

Unter den vorstehend beschriebenen Versuchsbedingungen wurde bei dem Vergleichsfiltermaterial eine Staubaufnahme von ca. 200 g/m² erzielt. Der Abscheidungsgrad wurde zu 99,4 % ermittelt.

Wie die vorstehenden Versuche zeigen, wird durch das zweischichtige erfindungsgemäße Filter LX1 (Versuch 2) gegenüber einem einschichtigen herkömmlichen Filtermaterial eine etwa 50 %ige Steigerung der Staubaufnahme und somit eine entsprechende Verlängerung der Standzeit erhalten.

Wird das erfindungsgemäße Filtermaterial (LX1.1) entsprechend Versuch 1 in einer Dicke ausgeführt, die ca. 24 % größer ist als die des Filters LX1, so erhält man damit eine um ca. 100 % erhöhte Staubaufnahme im Vergleich zu dem einschichtigen herkömmlichen Filtermaterial L1.

In der nachstehenden Tabelle werden die Ergebnisse der vorstehenden Versuche zusammengefaßt :

Tabelle

Bestimmung von Staubaufnahme und Abscheidungsgrad bis zur Erreichung eines definierten Durchflußwiderstandes

| Filter | Filterdicke | Raumgewicht g/cm³ | Staubaufnahme g/m² | Abscheidungsgrad % |
|---|---|---|---|---|
| LX 1 (gemäß der Erf.) | 0,65 | 0,158 | 300 | 99,6 |
| LX 1.1 (gemäß der Erf.) | 0,78 | 0,153 | 390–400 | 99,7 |
| L 1 (gem. St. d. Techn.) | 0,65 | 0,166 | 200 | 99,4 |

**Patentansprüche**

1. Mehrschichtiges Filtermaterial aus einer Grob- und Feinfilterschicht, wobei die Filterschichten einen Anteil natürlicher Fasern enthalten, und die einzelnen Schichten aus Faserstoffsuspensionen verschiedener Zusammensetzung ohne Verwendung eines Bindemittels auf der Papiermaschine miteinander verbunden sind, dadurch gekennzeichnet, daß

a) die Grobfilterschicht aus einem Gemisch natürlicher und synthetischer Fasern besteht, wobei

b) mindestens ein Teil der synthetischen Fasern strukturiert ist, und

c) an der Oberfläche der Grobfilterschicht liegende synthetische Fasern von der Ebene des Filtermaterials abstehen.

2. Mehrschichtiges Filtermaterial gemäß Anspruch 1, dadurch gekennzeichnet, daß die Grobfilterschicht strukturierte synthetische Fasern mit einem Titer von 1,2 bis 15 dtex und einer Länge von 0,5 bis 40 mm enthält.

3. Mehrschichtiges Filtermaterial gemäß Anpruch 1, dadurch gekennzeichnet, daß die Grobfilter-

6

schicht natürliche Fasern mit einem Durchmesser von 20 bis 50 μm und einer Länge von 2,5 bis 6 mm enthält.

4. Mehrschichtiges Filtermaterial gemäß Anspruch 1, dadurch gekennzeichnet, daß die Feinfilterschicht natürliche Fasern mit einem Durchmesser von 7 bis 20 μm und einer Länge von 0,5 bis 3,5 mm enthält.

5. Mehrschichtiges Filtermaterial gemäß Anspruch 1 und 2, dadurch gekennzeichnet, daß die Grobfilterschicht aus mehreren Schichten unterschiedlicher Porosität besteht.

6. Mehrschichtiges Filtermaterial gemäß Anspruch 1 und 4, dadurch gekennzeichnet, daß die Feinfilterschicht einen Anteil von 0,1 bis 50 % synthetischer Fasern enthält.

7. Mehrschichtiges Filtermaterial gemäß Anspruch 1, dadurch gekennzeichnet, daß das Gewichtsverhältnis der Grobfilterschicht zur Feinfilterschicht im Bereich von 1 : 4 bis 4 : 1 liegt.

8. Mehrschichtiges Filtermaterial gemäß Anspruch 1, dadurch gekennzeichnet, daß es zwischen der Grobfilterschicht und der Feinfilterschicht eine Mischzone aufweist, welche ein Gemisch der Faseranteile von Grob- und Feinfilterschicht umfaßt.

9. Mehrschichtiges Filtermaterial gemäß Anspruch 1 und 2, dadurch gekennzeichnet, daß die strukturierten synthetischen Fasern der Grobfilterschicht eine X-, Y- oder V-Form aufweisen oder hantelförmig ausgebildet sind.

10. Mehrschichtiges Filtermaterial gemäß Anspruch 1, 2 und 9, dadurch gekennzeichnet, daß die strukturierten synthetischen Fasern der Grobfilterschicht Mehrkomponenten-, insbesondere Kern-Mantel- Fasern und Bifilar-Fasern darstellen.

11. Filtermaterial gemäß Anspruch 9, dadurch gekennzeichnet, daß die synthetischen Faser der Grobfilterschicht eine Polyacrylnitrilfaser darstellt.

12. Filtermaterial gemäß Anspruch 11, dadurch gekennzeichnet, daß die Polyacrylnitrilfaser einen Titer von 1,2 bis 15 dtex und eine Länge von 3 bis 40 mm aufweist.

13. Filtermaterial gemäß Anspruch 11 und 12, dadurch gekennzeichnet, daß die Polyacrylnitrilfaser hantelförmig strukturiert ist.

14. Filtermaterial gemäß Anspruch 1 oder 2, dadurch gekennzeichnet, daß die synthetische Faser der Grobfilterschicht aus einem Polyamid einer Dicarbonsäure und Hexamethylendiamin, einer Polyamidfaser auf Caprolactambasis, einer Cellulose-Regenerat-Faser oder Glasfaser besteht.

15. Filtermaterial gemäß Anspruch 1, dadurch gekennzeichnet, daß die an der Oberfläche der Grobfilterschicht liegenden synthetischen Fasern in statistischer Verteilung von der Ebene des Filtermaterials abstehen.

16. Filtermaterial gemäß Anspruch 1, dadurch gekennzeichnet, daß die an der Oberfläche der Grobfilterschicht liegenden synthetischen Fasern überwiegend in einem spitzen Winkel von der Ebene des Filtermaterials abstehen.

17. Filtermaterial gemäß Anspruch 1, 15 und 16, dadurch gekennzeichnet, daß die an der Oberfläche der Grobfilterschicht von der Ebene des Filtermaterials abstehenden synthetischen Fasern in unterschiedlicher Länge abstehen.

18. Filtermaterial gemäß Anspruch 17, dadurch gekennzeichnet, daß die synthetischen Fasern an der Oberfläche der Grobfilterschicht von der Ebene des Filtermaterials 0,5 bis 20 mm abstehen.

19. Filtermaterial gemäß Anspruch 1 und 3, dadurch gekennzeichnet, daß die in der Grobfilterschicht enthaltende natürliche Faser von Nadelhölzern stammt.

20. Filtermaterial gemäß Anspruch 19 und 20, dadurch gekennzeichnet, daß die natürliche Faser einen hochporösen Kiefernzellstoff darstellt.

21. Filtermaterial gemäß Anspruch 1 und 3, dadurch gekennzeichnet, daß die natürliche Faser in der Grobfilterschicht Linters der Baumwollpflanze mit einem Durchmesser von 20 bis 25 μm und einer Länge von 2 bis 6 mm enthält.

22. Filtermaterial gemäß Anspruch 1 bis 3, dadurch gekennzeichnet, daß der Anteil der strukturierten synthetischen Fasern in der Grobfilterschicht 20 bis 80 Gew.-% beträgt, bezogen auf das Gesamtgewicht der Grobfilterschicht.

23. Filtermaterial gemäß Anspruch 1 bis 3, dadurch gekennzeichnet, daß der Anteil der natürlichen Faser in der Grobfilterschicht 20 bis 80 Gew.-% beträgt, bezogen auf das Gesamtgewicht der Grobfilterschicht.

24. Filtermaterial gemäß Anspruch 1 und 4, dadurch gekennzeichnet, daß die Feinfilterschicht Fasern aus Laubhölzern mit einem Durchmesser von 5 bis 20 μm und einer Länge von 0,5 bis 1,5 mm enthält.

25. Filtermaterial gemäß Anspruch 1 und 4, dadurch gekennzeichnet, daß die Feinfilterschicht Fasern von Einjahrespflanzen mit einem Durchmesser von 7 bis 12 μm und einer Länge von 0,5 bis 3,5 mm enthält.

26. Filtermaterial gemäß Anspruch 1, 4 und 24, dadurch gekennzeichnet, daß die Feinfilterschicht eine Eukalyptusfaser enthält.

27. Filtermaterial gemäß Anspruch 24 bis 26, dadurch gekennzeichnet, daß der Feinfaseranteil in der Feinfilterschicht 15 bis 50 Gew.-%, bezogen auf das Gesamtgewicht der Feinfilterschicht, beträgt.

28. Filtermaterial gemäß Anspruch 1 und 4, dadurch gekennzeichnet, daß die Feinfilterschicht einen Füllstoff enthält.

29. Filtermaterial gemäß Anspruch 1 und 4, dadurch gekennzeichnet, daß dieses eine Imprägnierung aufweist.

30. Filtermaterial gemäß Anspruch 29, dadurch gekennzeichnet, daß die Imprägnierung aus der Gruppe der Aminoplaste, Phenoplaste, Epoxi- und Vinylharze, Acrylharze und Urethane gewählt wird.

31. Filtermaterial gemäß Anspruch 1, dadurch gekennzeichnet, daß dieses zwischen der Grobfilterschicht und der Feinfilterschicht eine Stützschicht aufweist.

32. Filtermaterial gemäß Anspruch 1, dadurch gekennzeichnet, daß die Stützschicht von einem synthetischen, halbsynthetischen oder metallischen Material gebildet wird und als Gewebe oder Endlosfilamente vorliegt.

33. Filtermaterial gemäß Anspruch 31 und 32, dadurch gekennzeichnet, daß die Stützschicht eine Baumwollschicht darstellt.

34. Filtermaterial gemäß Anspruch 1, dadurch gekennzeichnet, daß dieses in einer Dicke von 0,5 bis 0,8 mm vorliegt.

35. Filtermaterial gemäß Anspruch 1, dadurch gekennzeichnet, daß es

a) eine Grobfilterschicht aus einem Gemisch strukturierter Polyacrylnitrilfasern mit einem Titer von 1,2 bis 15 dtex und einer Länge von 4 bis 8 mm und einem hochporösen Kiefernzellstoff mit einem Durchmesser von 20 bis 50 μm und einer Länge von 2,5 bis 6 mm, und

b) eine Feinfilterschicht aus vorwiegend natürlichen Fasern mit einem Durchmesser von 7 bis 12 μm und einer Länge von 0,5 bis 3,5 mm umfaßt,

c) wobei an der Oberfläche der Grobfilterschicht liegende Acrylnitrilfasern von der Ebene des Filtermaterials in unterschiedlicher Länge und unterschiedlichem Winkel abstehen.

36. Verfahren zur Herstellung eines mehrschichtigen Filtermaterials gemäß den Ansprüchen 1 bis 35, wobei die Zuführung des Stoffauflaufes verschiedener Faserstoffsuspensionen in mindestens zwei unmittelbar übereinander angeordneten Einzelkanälen auf ein als Steilsieb ausgebildetes, endloses Entwässerungssieb erfolgt, und das Filtermaterial entwässert, imprägniert und getrocknet wird, dadurch gekennzeichnet, daß

a) zunächst über mindestens einen der im unteren Teil der Stoffzuführung angeordneten Einzelkanäle eine wässrige Faserstoffsuspension von vorwiegend natürlichen Fasern mit einem Durchmesser von 7 bis 20 μm und einer Länge von 0,5 bis 3,5 mm, und

b) dann über mindestens einen der im oberen Teil der Stoffzuführung angeordneten Einzelkanäle eine wässrige Faserstoffsuspension aus einem Gemisch strukturierter, synthetischer Fasern mit einem Titer von 1,2 bis 15 dtex und einer Länge von 0,5 bis 40 mm, und natürlichen Fasern, mit einem Durchmesser von 20 bis 50 μm und einer Länge von 2,5 bis 6 mm auf das Steilsieb aufgebracht werden.

37. Verfahren gemäß Anspruch 36, dadurch gekennzeichnet, daß zwischen mindestens einer Grobfilterschicht und mindestens einer Feinfilterschicht eine Stützschicht aus einem synthetischen, halbsynthetischen oder metallischen Material bzw. aus Baumwolle in Form eines Gewebes bzw. Gewirkes oder als Endlosfilamente eingearbeitet wird.

38. Verwendung des Filtermaterials gemäß den Ansprüchen 1 bis 35 zur Filtration von Verunreinigungen aus der Luft, Gasen, Dämpfen und Flüssigkeiten.

39. Verwendung des Filtermaterials gemäß den Ansprüchen 1 bis 35 als Kfz-Luftfilter.

## Claims

1. Multilayer filter material made of a coarse and a fine filter layer, wherein the filter layers contain a proportion of natural fibres, and the individual layers of fibre material suspensions of different compositions are interconnected without the use of a bonding agent on the paper machine, characterized in that

a) the coarse filter layer consists of a mixture of natural and synthetic fibres, wherein

b) at least a part of the synthetic fibres is structured, and

c) on the surface of said coarse filter layer the synthetic fibres located thereon protrude from the plane of the filter material.

2. Multilayer filter material according to claim 1, characterized in that the coarse layer of the filter contains structured synthetic fibres with a titer of from 1.2 to 15 dtex and a length of 0.5 to 40 mm.

3. Multilayer filter material according to claim 1, characterized in that the coarse filter layer contains natural fibres with a diameter of 20 to 50 microns and a length of 2.5 to 6.0 mm.

4. Multilayer filter material according to claim 1, characterized in that the fine filter layer contains natural fibres with a diameter of 7-20 microns and a length of from 0.5 to 3.5 mm.

5. Multilayer filter material according to claim 1 and 2, characterized in that the coarse filter layer consists of several layers with differing porosity.

6. Multilayer filter material according to claim 1 and 4, characterized in that the fine filter layer contains a share of from 0.1 to 50 % of synthetic fibres.

7. Multilayer filter material according to claim 1, characterized in that the weight ratio of the coarse filter layer to the fine filter layer is in the range from 1 : 4 to 4 : 1.

8. Multilayer filter material according to claim 1, characterized in that there is a mixed zone between the coarse filter layer and the fine filter layer, which comprises a mixture of the fibre shares of the coarse and fine filter layers.

9. Multilayer filter material according to claim 1 and 2, characterized in that the structured synthetic fibers of the coarse filter layer have an X, Y or V shape or are designed in dumb-bell form.

10. Multilayer filter material according to claim 1, 2 and 9, characterized in that the structured synthetic fibres of the coarse filter layer constitute multi-component-fibres, especially core-covering fibres and bifilar fibres.

11. Filter material according to claim 9, characterized in that the synthetic fibres of the coarse filter layer are a polyacrylnitrile fibre.

12. Filter material according to claim 11, characterized in that the polyacryl nitrile fibre has a titer of from 1.2 to 15 dtex and a length of from 3 to 40 mm.

13. Filter material according to claim 11 and 12, characterized in that the polyacryl nitrile fibre is structured in dumb-bell shape.

14. Filter material according to claim 1 or 2, characterized in that the synthetic fibres of the coarse filter layer consist of a polyamide of a dicarboxylic acid and hexamethylenediamine, a polyamide fibre on caprolactam base, a cellulose regenerate fibre or of a glass fibre.

15. Filter material according to claim 1, characterized in that the synthetic fibres lying on the surface of the coarse filter layer protrude in static distribution from the plane of the filter material.

16. Filter material according to claim 1, characterized in that the synthetic fibres lying on the surface of the coarse filter layer protrude predominantly at an acute angle from the plane of the filter material.

17. Filter material according to claim 1, 15 and 16, characterized in that the synthetic fibres protruding from the plane of the filter material on the surface of the coarse filter layer protrude in differing lengths.

18. Filter material according to claim 17, characterized in that the synthetic fibres on the surface of the coarse of layer the filter protrude from the plane of the filter material by 0.5 to 20 mm.

19. Filter material according to claim 1 and 3, characterized in that the natural fibres contained in the coarse filter layer stem from coniferous wood.

20. Filter material according to claim 19 and 20, characterized in that the natural fibres are a highly porous pine cellulose.

21. Filter material according to claim 1 and 3, characterized in that the natural fibers in the coarse filter layer contain linters of the cotton plant with a diameter of from 20 to 25 microns and a length of from 2 to 6 mm.

22. Filter material according to claims 1 to 3, characterized in that the share of the structured synthetic fibres in the coarse filter layer amounts to 20 to 80 % by weight, based on the total weight of the coarse filter layer.

23. Filter material according to claims 1 to 3, characterized in that the share of natural fibres in the coarse filter layer amounts to 20 to 80 % by weight, based on the total weight of the coarse filter layer.

24. Filter material according to claim 1 and 4, characterized in that the fine filter layer contains fibres of deciduous woods having a diameter of from 5 to 20 microns and a length of from 0.5 to 1.5 mm.

25. Filter material according to claim 1 and 4, characterized in that the fine filter layer contains fibres of yearling plants having a diameter of from 7 to 12 microns and a length of from 0.5 to 3.5 mm.

26. Filter material according to claim 1, 4 and 24, characterized in that the fine filter layer contains an eucalyptus fibre.

27. Filter material according to claims 24 to 26, characterized in that the fine fibre share in the fine filter layer amounts to 15 to 50 % by weight, based on the total weight of the fine filter layer.

28. Filter material according to claim 1 and 4, characterized in that the fine filter layer contains a filler material.

29. Filter material according to claim 1 and 4, characterized in that it has an impregnation.

30. Filter material according to claim 29, characterized in that the impregnation is selected from the group of the aminoplasts, phenoplasts, epoxy- and vinyl resins, acrylic resins and urethane.

31. Filter material according to claim 1, characterized in that it has a support layer between the coarse filter layer and the fine filter layer.

32. Filter material according to claim 1, characterized in that the support layer is formed from a synthetic, semi-synthetic or metallic material and is present as a fabric or endless filament.

33. Filter material according to claim 31 and 32, characterized in that the support layer is a layer of cotton.

34. Filter material according to claim 1, characterized in that it is present in a thickness of 0.5 to 0.8 mm.

35. Filter material according to claim 1, characterized in that :

a) it comprises a coarse filter layer of a mixture of structured polyacryl nitrile fibres having a titer of from 1.2 to 15 dtex and a length of 4 to 8 mm and a highly porous coniferous cellulose with a diameter of from 20 to 50 microns and a length of from 2.5 to 6 mm, and

b) a fine filter layer of primarily natural fibres having a diameter of 7 to 12 microns and a length of from 0.5 to 3.5 mm,

c) whereby the acrylonitrile fibres lying on the surface of the coarse filter layer protrude in different lengths and at different angles from the plane of said filter material.

36. Process for the manufacture of a multilayered filter material according to claims 1 to 35, wherein the supply of the pulp emergence of different fibre material suspensions takes place in at least two directly superimposed individual channels on to an inclined portion of a dewatering endless screen, and the filter material is dewatered, impregnated and dried, characterized in that

a) at first an aqueous fibrous suspension is applied *via* at least one of the individual channels arranged in the lower part of the pulp supply, said suspension being of primarily natural fibres having a diameter of from 7 to 20 microns and a length of from 0.5 to 3.5 mm and

b) then *via* at least one of the individual channels arranged in the upper part of the pulp supply an aqueous fibrous suspension of a mixture of structured synthetic fibres having a titer of 1.2 to 15 dtex and a length of 0.5 to 40 mm, and natural fibres having a diameter of 20 to 50 microns and a length of from 2.5 to 6 mm is applied to the inclined portion of the screen.

37. Process according to claim 36, characterized in that between at least one coarse filter layer and at least one fine filter layer a support layer is inserted made of a synthetic, semi-synthetic or metallic material or cotton wool in the form of a fabric or as an endless filament.

38. Use of the filter material according to claims 1 to 35 for the filtration of impurities from the atmosphere, gases, vapors and from fluids.

39. Use of the filter material according to claims 1 to 35 for automobile air filters.


## Revendications

1. Matériau filtrant à plusieurs couches, avec une couche de filtrage grossier et une couche de filtrage fin, où les couches filtrantes contiennent une part de fibres naturelles, et où les différentes couches constituées de suspensions de fibres de compositions différentes sont assemblées entre elles sur la machine à papier sans utiliser un liant, caractérisé par le fait que :

a) la couche de filtrage grossier est constituée d'un mélange de fibres naturelles et de fibres synthétiques,

b) au moins une partie des fibres synthétiques est structurée, et

c) les fibres synthétiques qui se trouvent sur la surface de la couche de filtrage grossier dépassent du plan du matériau filtrant.

2. Matériau filtrant à plusieurs couches selon la revendication 1, caractérisé par le fait que la couche de filtrage grossier contient des fibres synthétiques structurées d'un titre de 1,2 à 15 dtex et d'une longueur de 0,5 à 40 mm.

3. Matériau filtrant à plusieurs couches selon la revendication 1, caractérisé par le fait que la couche de filtrage grossier contient des fibres naturelles d'un diamètre de 20 à 50 microns et d'une longueur de 2,5 à 6 mm.

4. Matériau filtrant à plusieurs couches selon la revendication 1, caractérisé par le fait que la couche de filtrage fin contient des fibres naturelles d'un diamètre de 7 à 20 microns et d'une longueur de 0,5 à 3,5 mm.

5. Matériau filtrant à plusieurs couches selon revendication 1 et 2, caractérisé par le fait que la couche de filtrage grossier est constituée de plusieurs couches de porosités différentes.

6. Matériau filtrant à plusieurs couches selon revendication 1 et 4, caractérisé par le fait que la couche de filtrage fin contient une part de 0,1 à 50 % de fibres synthétiques.

7. Matériau filtrant à plusieurs couches selon la revendication 1, caractérisé par le fait que le rapport de poids entre la couche de filtrage grossier et la couche de filtrage fin est situé entre 1 : 4 et 4 : 1.

8. Matériau filtrant à plusieurs couches selon la revendication 1, caractérisé par le fait qu'il présente entre la couche de filtrage grossier et la couche de filtrage fin une zone mixte qui contient un mélange d'une partie des fibres de la couche de filtrage grossier et d'une partie des fibres de la couche de filtrage fin.

9. Matériau filtrant à plusieurs couches selon revendication 1 et 2, caractérisé par le fait que les fibres synthétiques structurées de la couche de filtrage grossier présentent une forme en X, en Y ou en V, ou sont configurées en forme de haltère.

10. Matériau filtrant à plusieurs couches selon revendication 1, 2 et 9, caractérisé par le fait que les fibres synthétiques structurées de la couche de filtrage grossier sont des fibres à plusieurs composants, notamment des fibres à âme et enveloppe et des fibres bifilaires.

11. Matériau filtrant selon la revendication 9, caractérisé par le fait que les fibres synthétiques de la couche de filtrage grossier sont des fibres de polyacrylonitrile.

12. Matériau filtrant selon la revendication 11, caractérisé par le fait que les fibres de polyacrylonitrile ont un titre de 1,2 à 15 dtex et une longueur de 3 à 40 mm.

13. Matériau filtrant selon revendication 11 et 12, caractérisé par le fait que les fibres de polyacrylonitrile sont structurées en forme de haltère.

14. Matériau filtrant selon la revendication 1 ou 2, caractérisé par le fait que les fibres synthétiques de la couche de filtrage grossier sont constituées de polyamide d'acide dicarboxylique et d'hexaméthylène- diamine, de fibres de polyamide à base de capro-lactame, de fibres cellulosiques régénérées ou de fibres de verre.

15. Matériau filtrant selon la revendication 1, caractérisé par le fait que les fibres synthétiques situées à la surface de la couche de filtrage grossier dépassent en répartition statistique du plan du matériau filtrant.

16. Matériau filtrant selon la revendication 1, caractérisé par le fait que les fibres synthétiques situées à la surface de la couche de filtrage grossier dépassent principalement sous un angle aigu du plan du matériau filtrant.

17. Matériau filtrant selon revendication 1, 15 et 16, caractérisé par le fait que les fibres synthétiques situées à la surface de la couche de filtrage grossier et dépassant du plan du matériau filtrant dépassent à diverses longueurs.

18. Matériau filtrant selon la revendication 17, caractérisé par le fait que les fibres synthétiques situées à la surface de la couche de filtrage grossier dépassent de 0,5 à 20 mm du plan du matériau filtrant.

19. Matériau filtrant selon revendication 1 et 3, caractérisé par le fait que les fibres naturelles contenues dans la couche de filtrage grossier sont à base de bois résineux.

20. Matériau filtrant selon la revendication 19, caractérisé par le fait que les fibres naturelles sont des fibres cellulosiques à base de pin fortement poreuses.

21. Matériau filtrant selon revendication 1 et 3, caractérisé par le fait que les fibres naturelles contenues dans la couche de filtrage grossier contiennent des linters de coton d'un diamètre de 20 à 25 microns et d'une longueur de 2 à 6 mm.

22. Matériau filtrant selon revendication 1 à 3, caractérisé par le fait que la part des fibres synthétiques structurées dans la couche de filtrage grossier est de 20 à 80 %, en pourcentage de poids par rapport au poids total de la couche de filtrage grossier.

23. Matériau filtrant selon revendication 1 à 3, caractérisé par le fait que la part des fibres naturelles dans la couche de filtrage grossier est de 20 à 80 %, en pourcentage de poids par rapport au poids total de la couche de filtrage grossier.

24. Matériau filtrant selon revendication 1 et 4, caractérisé par le fait que la couche de filtrage fin contient des fibres de bois feuillus d'un diamètre de 5 à 20 microns et d'une longueur de 0,5 à 1,5 mm.

25. Matériau filtrant selon revendication 1 et 4, caractérisé par le fait que la couche de filtrage fin contient des fibres de plantes annuelles d'un diamètre de 7 à 12 microns et d'une longueur de 0,5 à 3,5 mm.

26. Matériau filtrant selon revendication 1, 4 et 24, caractérisé par le fait que la couche de filtrage fin contient des fibres d'eucalyptus.

27. Matériau filtrant selon revendication 24 à 26, caractérisé par le fait que la part de fibres fines de la couche de filtrage fin est de 15 à 50 %, en pourcentage de poids par rapport au poids total de la couche de filtrage fin.

28. Matériau filtrant selon revendication 1 à 4, caractérisé par le fait que la couche de filtrage fin contient une charge.

29. Matériau filtrant selon revendication 1 et 4, caractérisé par le fait qu'il présente une imprégnation.

30. Matériau filtrant selon la revendication 29, caractérisé par le fait que l'imprégnation est choisie dans le groupe des aminoplastes, des phénoplastes, des résines époxydes et vinyliques, des résines acryliques et des uréthanes.

31. Matériau filtrant selon la revendication 1, caractérisé par le fait qu'il présente une couche de support entre la couche de filtrage grossier et la couche de filtrage fin.

32. Matériau filtrant selon la revendication 1, caractérisé par le fait que la couche de support est formée par un matériau synthétique, semi-synthétique ou métallique, et est présente sous la forme d'un tissu ou de filaments sans fin.

33. Matériau filtrant selon revendication 31 et 32, caractérisé par le fait que la couche de support est une couche de coton.

34. Matériau filtrant selon la revendication 1, caractérisé par le fait qu'il présente une épaisseur de 0,5 à 0,8 mm.

35. Matériau filtrant selon la revendication 1, caractérisé par le fait qu'il :

a) comprend une couche de filtrage grossier constituée d'un mélange de fibres structurées de polyacrylonitrile d'un titre de 1,2 à 15 dtex et d'une longueur de 4 à 8 mm, et de fibres cellulosiques à base de pin très poreuses d'un diamètre de 20 à 50 microns et d'une longueur de 2,5 à 6 mm, et

b) une couche de filtrage fin constituée principalement de fibres naturelles d'un diamètre de 7 à 12 microns et d'une longueur de 0,5 à 3,5 mm,

c) les fibres d'acrylonytrile situées à la surface de la couche de filtrage grossier dépassant du plan du matériau filtrant à diverses longueurs et sous divers angles.

36. Procédé de fabrication d'un matériau filtrant à plusieurs couches selon les revendications 1 à 35, l'amenée des différentes suspensions de fibres s'effectuant dans au moins deux canaux individuels disposés immédiatement l'un au-dessus de l'autre sur une toile d'égouttage sans fin réalisée sous la forme d'une toile inclinée, et le matériau filtrant étant égoutté, imprégné et séché, caractérisé par le fait que :

a) une suspension aqueuse de fibres constituée essentiellement de fibres naturelles d'un diamètre de 7 à 20 microns et d'une longueur de 0,5 à 3,5 mm est d'abord appliquée sur la toile inclinée par l'intermédiaire d'au moins un des canaux individuels disposés dans la partie inférieure de la tête de machine, et

b) une suspension aqueuse de matières fibreuses constituée d'un mélange de fibres synthétiques structurées d'un titre de 1,2 à 15 dtex et d'une longueur de 0,5 à 40 mm, et de fibres naturelles d'un diamètre de 20 à 50 microns et d'une longueur de 2,5 à 6 mm est ensuite appliquée sur la toile inclinée par l'intermédiaire d'au moins un des canaux individuels disposés dans la partie supérieure de la tête de machine.

37. Procédé selon la revendication 36, caractérisé par le fait qu'une couche de support constituée d'un matériau synthétique, semi-synthétique ou métallique ou encore de coton sous la forme d'un tissu ou d'un tricot ou sous la forme de filaments sans fin est incorporée entre au moins une couche de filtrage grossier et au moins une couche de filtrage fin.

38. Application du matériau filtrant selon les revendications 1 à 35 à la filtration d'impuretés contenues dans de l'air, des gaz, des vapeurs ou des liquides.

39. Application du matériau filtrant selon les revendications 1 à 35 comme filtre à air pour véhicules automobiles.

FIG. 1

1   2   3   4

FIG. 2

4